# EUROPEAN PATENT APPLICATION

(11) **EP 4 474 868 A2**
(43) Date of publication of application: **11.12.2024**
(21) Application number: 24174421.8
(22) Date of filing: 07.05.2024
(51) Int. Cl.: G01S 17/86, G01S 17/89, G01S 7/41

(54) **METHOD FOR GENERATING A HIGH-RESOLUTION POINT CLOUD AND METHOD FOR TRAINING AN IMAGE SYNTHESIS NEURAL NETWORK**

(30) Priority: 18.05.2023 GB 202307401
(71) Applicant: Continental Autonomous Mobility Germany GmbH, 85057 Ingolstadt (DE); Continental Automotive Technologies GmbH, 30175 Hannover (DE)
(72) Inventor: Pangottil, Shanoop, 339780 Singapore (SG); Rajendran, Vinod, 339780 Singapore (SG)
(74) Representative: Continental Corporation

(57) **Abstract**

A computer-implemented method for generating a high-resolution point cloud includes generating a first point cloud based on first sensor data, generating a semantic occupancy grid based on the first point cloud, generating a second point cloud based on at least one of a second sensor data and a third sensor data, combining the semantic occupancy grid with the second point cloud to result in a third point cloud, and generating a fourth point cloud by an image synthesis neural network. The fourth point cloud is generated based on the third point cloud. Resolution of the fourth point cloud is higher than resolution of any one of the first point cloud, the second point cloud and the third point cloud.

## Description

### TECHNICAL FIELD

Various embodiments relate to methods for generating a high-resolution point cloud and methods for training an image synthesis neural network.

### BACKGROUND

Three-dimensional (3D) lidar is a preferred sensor for vehicles, especially autonomous vehicles, due to robustness of its data and the suitability of its sensor data for being used efficiently in perception pipelines. Unfortunately, point clouds scanned in the real world are often incomplete or sparse due to partial observation and self-occlusion. Due to the nature of scanning lidars and their beam patterns, the number of data points on an object depends on its distance to the lidar sensor and falls off rapidly with increasing distance. "Narrow" classes like pedestrians and cyclists have very few data points at distances larger than 50m, which can lead to a false negative from the object detection network. Existing approaches to densifying point clouds typically apply a uniform densification strategy to the entire point cloud. These approaches suffer from the addition of noise and causes low quality output at long range since the only prior information for the densification network is the 3D information in the point cloud, which is often too sparse at long ranges and can have occlusions at short ranges. However, it is important to recover the complete shape of the detected objects for various autonomous vehicle downstream tasks such as 3D reconstruction, augmented reality and scene understanding in order to build a reliable autonomous vehicle.

In view of the above, there is a need for an improved method of generating high resolution point clouds, that can address at least some of the abovementioned problems.

### SUMMARY

According to various embodiments, a computer-implemented method for generating a high-resolution point cloud is provided. The method includes generating a first point cloud based on first sensor data, generating a semantic occupancy grid based on the first point cloud, generating a second point cloud based on at least one of a second sensor data and a third sensor data, combining the semantic occupancy grid with the second point cloud to result in a third point cloud, and generating a fourth point cloud by an image synthesis neural network. The fourth point cloud is generated based on the third point cloud. Resolution of the fourth point cloud is higher than resolution of any one of the first point cloud, the second point cloud and the third point cloud.

According to various embodiments, a computer program product is provided. The computer program product includes instructions, embodied in one or more non-transitory computer-readable storage mediums, executable by at least one processor to perform the abovementioned method for generating a high-resolution point cloud.

According to various embodiments, a point cloud generation system is provided. The point cloud generation system includes a memory and a processor communicatively coupled to the memory. The processor is configured to perform the abovementioned method for generating a high-resolution point cloud.

According to various embodiments, a vehicle is provided. The vehicle includes a first sensor configured to generate the first sensor data, a second sensor configured to generate the second sensor data or the third sensor data, and the abovementioned point cloud generation system.

According to various embodiments, a method for training an image synthesis neural network is provided. The image synthesis neural network includes a first network and a second network. The method includes creating a mask using feature values of an input training point cloud, and applying the mask to the input training point cloud, resulting in a modified training point cloud. The method further includes inputting the modified training point cloud to the first network to generate a coarse training point cloud, and inputting the coarse training point cloud to the second network, to generate an output training point cloud. The method further includes comparing the output training point cloud and the input training point cloud, and adjusting weights of the second neural network based on comparison of the output training point cloud and the input training point cloud.

According to various embodiments, a data structure is provided. The data structure is generated by carrying out the abovementioned method for training an image synthesis neural network.

Additional features for advantageous embodiments are provided in the dependent claims.

### BRIEF DESCRIPTION OF THE DRAWINGS

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
FIG. 1 is a simplified block diagram that illustrates a method for generating a high-resolution point cloud according to an embodiment.
FIG. 2 is a simplified block diagram that illustrates a method for generating a high-resolution point cloud according to another embodiment.
FIG. 3 shows a block diagram of an example of a vehicle according to various embodiments.
FIG. 4 shows a block diagram of a point cloud synthesis process, according to various embodiments.
FIG. 5 shows a block diagram of a point cloud generation system according to various embodiments.
FIG. 6 shows a block diagram of a method for training the image synthesis neural network according to various embodiments.
FIG. 7 shows a flow diagram of a method for generating a high-resolution point cloud according to various embodiments.
FIG. 8 shows a flow diagram of a method for training an image synthesis neural network according to various embodiments.

### DESCRIPTION

Embodiments described below in context of the devices are analogously valid for the respective methods, and vice versa. Furthermore, it will be understood that the embodiments described below may be combined, for example, a part of one embodiment may be combined with a part of another embodiment.

It will be understood that any property described herein for a specific device may also hold for any device described herein. It will be understood that any property described herein for a specific method may also hold for any method described herein. Furthermore, it will be understood that for any device or method described herein, not necessarily all the components or steps described must be enclosed in the device or method, but only some (but not all) components or steps may be enclosed.

The term "coupled" (or "connected") herein may be understood as electrically coupled or as mechanically coupled, for example attached or fixed, or just in contact without any fixation, and it will be understood that both direct coupling or indirect coupling (in other words: coupling without direct contact) may be provided.

In this context, the device as described in this description may include a memory which is for example used in the processing carried out in the device. A memory used in the embodiments may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory).

In order that the invention may be readily understood and put into practical effect, various embodiments will now be described by way of examples and not limitations, and with reference to the figures.

According to various embodiments, a method 100 for generating a high-resolution point cloud may be provided. The method 100 may include generating a semantic occupancy grid based on a radar-generated point cloud, forming a modified point cloud based on a lidar-generated point cloud and the semantic occupancy grid, and generating an output point cloud by feeding the modified point cloud to a guided diffusion model. The output point cloud may be a high-resolution point cloud, with an increased number of data point as compared to any one of the lidar-generated point cloud and the radar-generated point cloud.

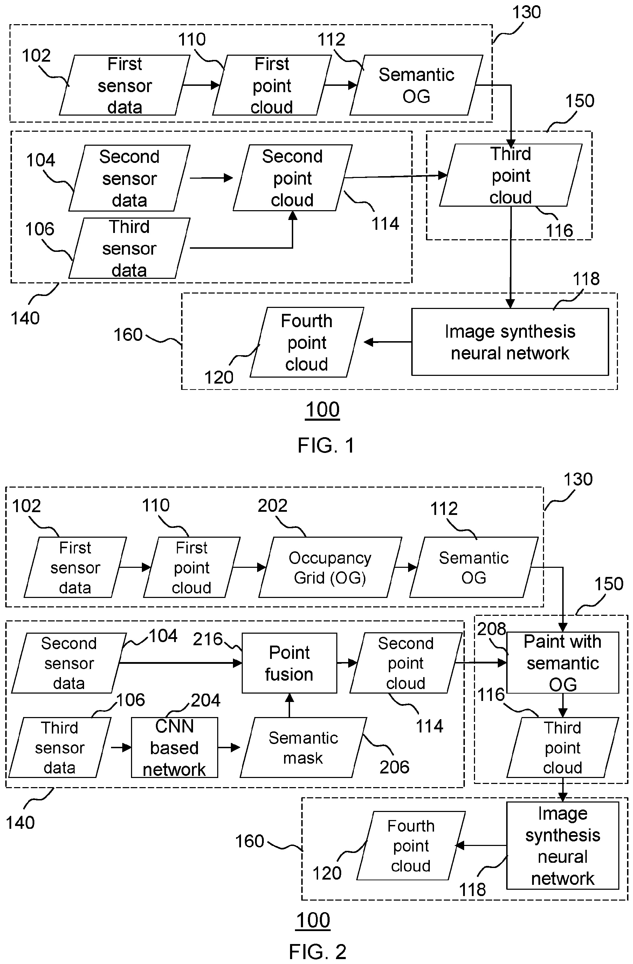

FIG. 1 is a simplified block diagram that illustrates the method 100 according to an embodiment. The method 100 may include a semantic occupancy grid (OG) generation process 130. In the semantic OG generation process 130, a first sensor data 102 may be converted into a first point cloud 110. The first sensor data 102 may be generated by a depth sensor. The depth sensor may be configured to determine the velocity a target in its field of view. The depth sensor may be further configured to estimate the size of the target, for example, by a clustering method. Suitable sensor types for the depth sensor may include radar sensors and frequency modulated continuous wave (FMCW) LiDAR sensors. A semantic OG 112 may be generated based on the first point cloud 110. The first sensor data 102 may be two-dimensional (2D) data or three-dimensional (3D) data.

The method 100 may further include a point cloud fusion process 140. The point cloud fusion process 140 may include combining a second sensor data 104 and a third sensor data 106 into a second point cloud 114. The second sensor data 104 may include a point cloud. The point cloud may be generated based on output of a lidar sensor. LiDAR sensors may be suitable for generating the second sensor data 104, in that LiDAR sensors have long range coverage. In another embodiment, the point cloud may be generated using pseudo-LiDAR approach, based on the output of other types of sensors, such as ultrasonic sensor, stereo camera, time-of-flight camera, structured light sensor, RGB-D camera and radar sensor.

The third sensor data 106 may be generated by a camera sensor. The third sensor data 106 may include color information.

The method 100 may further include a point cloud enhancement process 150. The point cloud enhancement process 150 may include fusing the semantic OG 112 with the second point cloud 114 to result in a third point cloud 116.

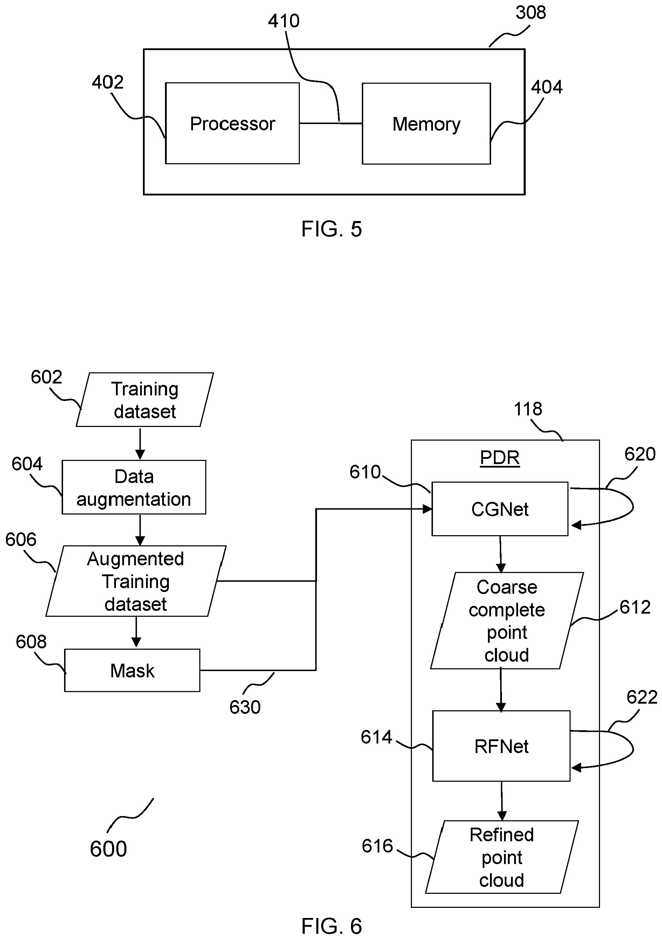

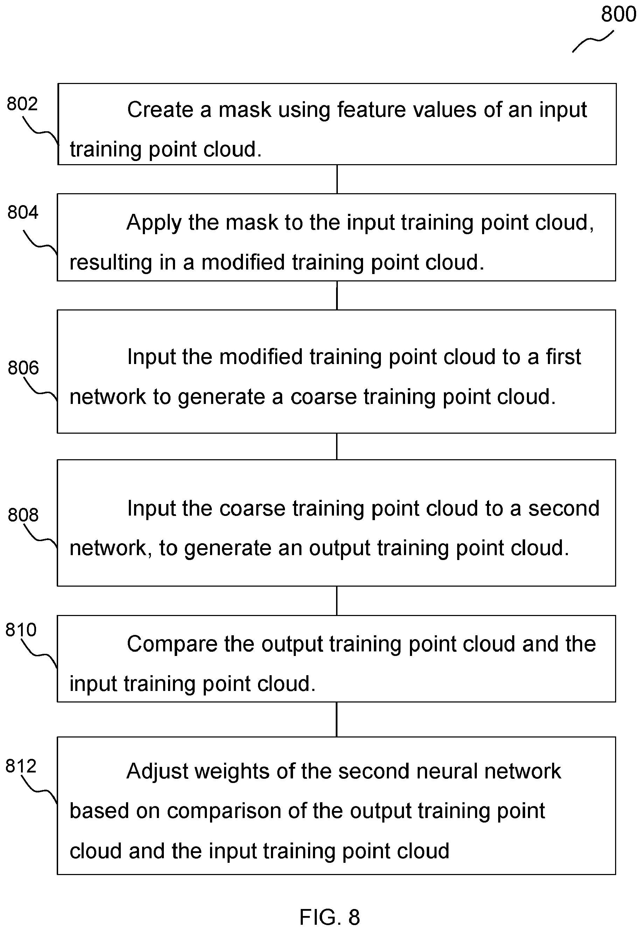

The method 100 may further include a point cloud synthesis process 160. In the point cloud synthesis process, the third point cloud 116 may be input to an image synthesis neural network 118, to generate an output that includes the fourth point cloud 120. The data density of the third point cloud may be higher than the data density of each of the first point cloud and the second point cloud, while the fourth point cloud may have a higher data density than the third point cloud. The image synthesis neural network 118 may denoise identified selective regions in the third point cloud 116 that resulted from multi-model sensor fusion, thereby generating a uniform and high-resolution point cloud that is the fourth point cloud 120. The image synthesis neural network 118 may be a trained network, and may be trained according to a method described subsequently with respect to FIGS. 6 and 8.

According to various embodiments, the image synthesis neural network 118 may include a denoising diffusion probabilistic model (DDPM), also abbreviated as "diffusion model". An example of a DDPM is disclosed in "Denoising Diffusion Probabilistic Models" by Ho et. al, which can be accessed at https://arxiv.org/pdf/2006.11239.pdf.

FIG. 2 is a simplified block diagram that illustrates the method 100 according to another embodiment. The semantic OG generation process 130 may further include generating an occupancy grid 202 based on the first point cloud 110. The semantic OG 112 may then be generated based on the occupancy grid 202. The occupancy grid 202 is a form of environment representation where a space is discretized into fixed size cells, and each cell contains a probability that it is occupied. The occupancy grid 202 may be a two-dimensional (2D) map or a grid of three-dimensional (3D) cells. Occupancy of a cell may indicate that there is an object or part of an object in the space represented by the cell. The semantic OG 112 is a form of an occupancy grid that includes semantic features of the occupancy, such as velocity, class, and uncertainty, among others. Semantic features may be added to each cell of the occupancy grid 202, to result in the semantic OG 112.

The point cloud fusion process 140 may include feeding the third sensor data 106 to a CNN based network 204, to thereby generate a semantic mask 206. The second sensor data 104 may be combined with the semantic mask 206 to result in the second point cloud 114, through a point fusion process 216. An example of the CNN based network 204 is disclosed in "Monocular Semantic Occupancy Grid Mapping with Convolutional Variational Auto-Encoders" by Lu et. al., which is incorporated herein by reference.

The point cloud enhancement process 150 may include a cloud painting process 208. The cloud painting process 208 may include painting the second point cloud 114 with the semantic OG 112, to result in the third point cloud 116. In the cloud painting process 208, semantic features of each cell are added to their corresponding voxels in the second point cloud 114, such that the third point cloud 116 includes more information about each cell than in the second point cloud 114.

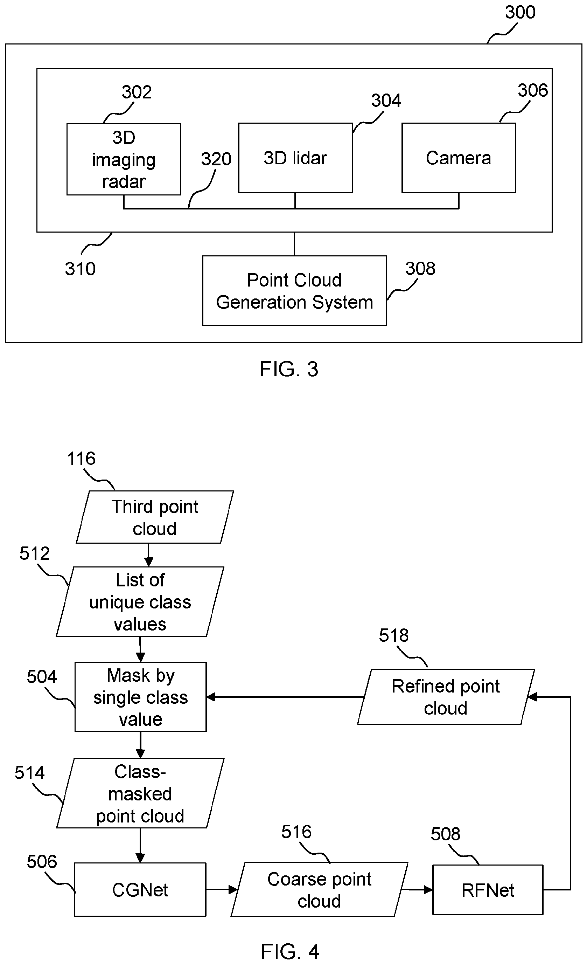

An example of the method 100, that can be combined with any above-described embodiment or with any below described further embodiment, will now be described with respect to FIGS. 2 and 3.

FIG. 3 shows a block diagram of an example of a vehicle 300 according to various embodiments. In this example, the vehicle 300 may include a point cloud generation system 308. The point cloud generation system 308 may be configured to perform the method 100. In addition, the vehicle 300 may be equipped with a sensor suite 310. The sensor suite 310 may include a lidar 304, an imaging radar 302 and a camera 306. The imaging radar 302 may be configured to generate the first sensor data 102. The lidar 304 may be configured to generate the second sensor data 104. Each of the imaging radar 302 and the lidar 304 may be a 3D sensor, in other words, it may generate spatial data in 3D. The camera 306 may be configured to generate the third sensor data 106. In carrying out the method 100, point cloud generation system 308 may first calibrate the intrinsic and extrinsic parameters of the plurality of sensors, and may also perform temporal alignment of the plurality of sensors. The sensor suite 310 and the point cloud generation system may be coupled to one another, for example, electrically or communicatively, via the coupling line 310.

In an alternative embodiment, the imaging radar 302 may be replaced by another type of depth sensor capable of determining velocity and approximate size of targets, such as a LiDAR sensor.

Next, the point cloud generation system 308 may accumulate and process the first sensor data 102 to generate a semantic OG 112, in the semantic OG generation process 130. The first sensor data 102 may include a target list, which includes spatial information of targets detected by the imaging radar 302. The spatial information may include the range, elevation angle and bearing angle of the targets.

The semantic OG generation process 130 may include generating the first point cloud 110 by transforming the target list into the first point cloud 110 in the reference frame of the vehicle 300, in other words, the vehicle 300 may be located at the centre of the reference frame. Generating the first point cloud 110 may include transforming the spatial information in the target list to cartesian coordinates, thereby resulting in data points that form the first point cloud 110. The first point cloud 110 may represent all static and dynamic radar targets. Semantic features like RCS and velocity may also be added into the first point cloud 110.

The semantic OG generation process 130 may further include transferring the target list to a local occupancy grid (OG). The local occupancy grid may be generated by modelling the detection as a 3D Gaussian with the mean shifted radially away from the vehicle 300. The first sensor data 102 may include radar cross-section (RCS) information on the targets. Using RCS heuristics, the RCS information in the first sensor data 102 may be used to model the target occupancy probability as a Gaussian distribution and to determine its primary radial axis of motion with the velocity vectors..

The vehicle 300 may be equipped with a plurality of imaging radars 302, and the output of each imaging radar 302 may be processed to result in a respective local OG. The plurality of local OGs may be integrated into a global OG (also referred herein as occupancy grid 202). The global OG is an occupancy grid in the reference frame of the vehicle 300.

The target lists from a plurality of measurement cycles of the imaging radar 302 may be integrated into the occupancy grid 202, in a process also referred herein as continuous accumulation. The image quality of the occupancy grid 202 may be enhanced, as target lists from more measurement cycles are added in. The occupancy grid 202 may be passed to a neural network-based feature encoder to output the semantic OG 112. The occupancy grid 202 may be a 3D occupancy grid, and accordingly, the neural network-based feature encoder may be a 3D encoder that outputs the semantic OG 112 as a 3D semantic OG. An example of the neural network-based feature encoder may be a convolutional neural network (CNN), as disclosed in "Semantic Segmentation on 3D Occupancy Grids for Automotive Radar" by Prophet et. al, which is incorporated herein by reference. The neural network-based feature encoder may also include other neural network architectures, such as a transformer neural network.

The point cloud generation system 308 may be configured to perform the point cloud fusion process 140. The point cloud fusion process 140 may include processing lidar data (for example, the second sensor data 104) together with camera image (for example, the third sensor data 106), to generate a colored point cloud (for example, the second point cloud 114). The point cloud fusion process 140 may include converting the second sensor data 104 into a 3D point cloud. The point cloud fusion process 140 may further include passing the third sensor data 106 to the CNN-based network 204 to output the semantic mask 206. The third sensor data 106 may be two-dimensional (2D) in nature, and as such, the semantic mask 206 may accordingly have two dimensions. Also, the camera image may contain color information, for example, in the form of red-blue-green (RGB) data, and as such, the semantic mask 206 may also include color information. In the point fusion process 216, the 2D semantic mask 206 may be projected in the 3D point cloud, to result in a 3D colored point cloud. The 3D color point cloud may be the second point cloud 114. Color is an important feature in images, and is often found to be a major clustering feature in semantic segmentation networks. As such, including color in the point cloud improves the ability of the image synthesis neural network 118 to understand boundaries of an object to aid in addition of points. This aid in more accurate reconstruction of the underlying geometry. An example of the point fusion process 216 is disclosed in "PointPainting: Sequential Fusion for 3D Object Detection" by Vora et. al.

The CNN-based network 204 may include any one of fully convolution network, SegNet, PSPNet, DeepLab, Mask-R-CNN, U-Net and M-Net, or other CNN-based neural networks. In another embodiment, the CNN-based network 204 may be replaced by another neural network type, such as the transformer neural network.

The point cloud generation system 308 may be further configured to perform the point cloud enhancement process 150. The point cloud enhancement process 150 may include painting the second point cloud 114 with information from its corresponding voxel in the semantic OG 112, to generate an enhanced version of 3D colored point cloud.

The point cloud generation system 308 may be further configured to perform the point cloud synthesis process 160, which is described further with respect to FIG. 4.

FIG. 4 shows a block diagram of the point cloud synthesis process 160, according to various embodiments. The point cloud synthesis process 160 may include feeding the third point cloud 116 to the image synthesis neural network 118 which may include a guided diffusion model 506. An example of a suitable guided diffusion model 506 may be a Conditional Point Diffusion-Refinement (PDR) model. An example of the conditional PDR model is disclosed in "A Conditional Point Diffusion-Refinement Paradigm for 3D Point Cloud Completion" by Lyu et. al, which is incorporated herein by reference. The PDR model is described further with respect to FIG. 6.

In another embodiment, the guided diffusion model 506 may be replaced by another type of neural network, such as any one of CNN, Variational Autoencoder, Generative Adversarial Network or transformer neural network.

The cloud synthesis process 160 may include extracting a list 512 of unique class values from the third point cloud 116. Next, third point cloud 116 may be masked based on a single class value from the list 512, to result in a class-masked point cloud 514. The masked regions are also referred herein as regions of interest (ROI), as they include the objects of interest such as other traffic participants, vehicles, road infrastructure and more. The class-masked point cloud 514 may be passed as an input to a trained CGNet 506 to generate a coarse point cloud 516. The coarse point cloud 516 may be passed as an input to the RFNet 508 to generate a refined point cloud 518 on the ROI. The refined point cloud 518 may have uniform, sharp local details and high-quality data points in the ROI.

The refined point cloud 518 may be masked for another single class value at 504, so that the resulting class-masked point cloud 514 may be fed to the CGNet 506 to result in another coarse point cloud 516. The other coarse point cloud 516 is fed to the RFNet 508 to generate another refined point cloud 518 where the ROIs have higher quality data points. The processes of masking by single class value 504, passing the class-masked point cloud 514 to the CGNet 506, and passing the coarse point cloud 516 to the RFNet 508 to generate a refined point cloud 518, may be repeated for all the class values in the list 512 is exhausted.

FIG. 5 shows a block diagram of the point cloud generation system 308 according to various embodiments. The point cloud generation system 308 may include a processor 402. The processor 402 may be communicatively coupled to the memory 404, and may be configured to perform the method 100. The memory 404 may store a computer program product that includes instructions executable by the processor 402 to perform the method 100. The memory and the processor 402 may be coupled to one another, for example, electrically or communicatively, via the coupling line 410. The memory 404 may store at least one of the first sensor data 102, the second sensor data 104, the third sensor data 106, the occupancy grid 202, the semantic OG 112, the second point cloud 114, the third point cloud 116, the fourth point cloud 120 and the image synthesis neural network 118.

According to various embodiments, the image synthesis neural network 118 may include a PDR model. The PDR paradigm is a point cloud completion method based on conditional Denoising Diffusion Probabilistic Models (DDPM). The PDR model may include a Conditional Generation Network (CGNet) 610 and a ReFinement Network (RFNet) 614.

According to various embodiments, the CGNet 610 may include a conditional generative model. An example of the conditional generative model is denoising diffusion probabilistic model (DDPM).

In an embodiment, the CGNet 610 may include a dual-path network architecture that includes an upper subnet and a lower subnet. The upper subnet, also referred to as a condition feature extraction subnet, may be configured to extract multi-level features from the incomplete point cloud. The lower subnet, also referred to as a denoise subnet, may be configured to receive the noisy point cloud as an input. The CGNet 610 may add a diffusion step, the global features extracted from the incomplete point cloud, and multi-level features extracted by the upper subnet, to the lower subnet. The diffusion step is first transformed into a 512-dimension step embedding vector through positional encoding and fully connected and then inserted to every level of the Denoise subnet. The network includes two fully-connected (FC) layers, first FC layer has input dimension 128 and output dimension 512. The second FC layer has input dimension 512 and output dimension 512. Both layers are followed by the Swish activation function. The condition point cloud is first transformed into a 1024-length global feature through a two-stage PointNet, and then inserted to every level of the Denoise subnet. The multi-level features extracted by the Condition Feature Extraction subnet are inserted to every level of the Denoise subnet through Feature Transfer modules.

The CGNet 610 may include an encoder that includes 4 levels of set abstraction modules. Each level has 4 shared fully connected layers i.e. MLP network with output size 1024,256,64,16 respectively. The MLP network sizes varies depending on the input point resolution. In general, if input size = l, then the sizes will be l/2, l/8, l/32, and l/128. The neighboring distance may be set to 0.1, 0.2, 0.4, 0.8, respectively.

The CGNet 610 may also include a decoder. The decoder may include feature propagation modules that include 4 levels of Point Adaptive Deconvolution (PA-Deconv) with attention layer. Each level may have 4 shared fully connected layers i.e. MLP network with output size 64,256,1024,2048 respectively. The MLP network sizes may vary depending on the input point resolution. In general, if input size = l, then the sizes will be l/8, l/32, l/2 and l. K=8 is set for K-Nearest Neighbours.

The CGNet 610 may also include feature transfer modules between the Condition Feature Extraction subnet and the Denoise subnet. It may include 9 Feature Transfer modules. The neighboring distance may be set to 0.1, 0.2, 0.4, 0.8, 1, 6, 0.8, 0.4, 0.2, 0.1, respectively.

The architecture of the RFNet may be similar to, or identical to, the CGNet 610.

FIG. 6 shows a block diagram of a method 600 for training the image synthesis neural network according to various embodiments. The method 600 may include a data augmentation process 604. The data augmentation process 604 may include rotating, mirroring, translating, and scaling a training dataset 602, to result in an augmented training dataset 606. The training dataset 602 may include a plurality of pairs of 3D colored point clouds. Each pair of 3D colored point clouds may include a low-resolution point cloud and a high-resolution point cloud, where both point clouds capture a common environment. For example, the low-resolution point clouds may be obtained using 32- or 64-channel resolution lidar sensors, while the high-resolution point clouds may be obtained using 128-channel high resolution lidar sensors. The low-resolution point clouds are used as input to the image synthesis neural network 118, while the high-resolution point clouds are used as ground truth to the image synthesis neural network 118.

As an example, the KITTI dataset, as disclosed in "Vision meets robotics: The kitti dataset" by Geiger et. al., Int. J. Robot. Res. 2013, 32, pages 1231-1237, may be processed to generate the training dataset 602. The KITTI dataset includes 64-channel high resolution point clouds. The 64-channel point clouds may be duplicated and have several rows removed from them, to result in corresponding low-resolution point clouds.

A masking process 608 may be performed on the augmented training dataset 606. The masking process 608 may include masking the point clouds in the augmented training data set 606 based on feature values of the point clouds, so as to select or define the regions of interest (ROI). The masking process 608 may further include adding in noise to randomize the mask. The masking process 608 may include masking ROIs or objects using at least one of various techniques, such as thresholding, clustering, or semantic segmentation. The masking process 608 may further include adding Gaussian noise to the masked regions after the ROIs are represented with the mask. The resulting output from the masking process 608, also referred to as first training input 630, may be provided to the image synthesis neural network 118.

In the method 600, the CGNet 610 and the RFNet 614 may be trained separately, using the same ground truth which may be the high-resolution point clouds in the training dataset 602.

The CGNet 610 may receive the first training input 630, and may be trained via a training loop 620 defined as follows:
a. sample a batch of input conditions and their corresponding ground truth outputs from the augmented training dataset 606;
b. generate a batch of random noise vectors;
c. feed the input conditions and noise vectors through the network to generate a batch of generated outputs;
d. compute the loss function between the generated outputs and the ground truth (high resolution point cloud in the training dataset 602);
e. compute the gradients of the loss function with respect to the network's parameters using backpropagation;
f. update the network's parameters using the optimization algorithm, such as AdamOptimizer with a learning rate of 2 × 10⁻⁴; and
g. repeat steps a-g until the CGNet 620 converges to a solution with low loss.

The steps described above may be repeated with the next set of observations until all the observations are used for training. This represents the first training epoch. This may be repeated until at least 500 epochs were completed.

Next, the trained CGNet 610 may then be used to generate training data, also referred herein as second training input, for the RFNet 614. The trained CGNet 610 may be used to generate 10 coarse point clouds for each partial point cloud in the training dataset 602, to increase diversity of the training dataset. The ground truth is the same for these coarse complete point clouds 612.

The RFNet 614 may receive the coarse complete point clouds 612, and may be trained via a training loop 622 defined as follows:
a. sample a batch of input conditions and their corresponding ground truth outputs from the training dataset 602;
b. generate a batch of random noise vectors;
c. feed the input conditions and noise vectors through the network to generate a batch of generated outputs;
d. compute the loss function between the generated outputs and the ground truth (high resolution point cloud);
e. compute the gradients of the loss function with respect to the network's parameters using backpropagation;
f. update the network's parameters using the optimization algorithm, such as an AdamOptimizer with a learning rate of 2 × 10-4; and
g. repeat steps a-g until the RFNet 614 converges to a solution with low loss.

In step d, the reconstruction quality of the point cloud output by the RFNet 614 may be evaluated based on at least one of Chamfer Distance (CD), Earth Mover's Distance (EMD) and F1-score metrics.

The steps described above may be repeated with the next set of observations until all the observations are used for training. This represents the first training epoch. This may be repeated until at least 250 epochs were completed.
The CGNet and the RFNet 614 may be trained independently, in other words, the training loop 622 of the RFNet does not alter the parameters of the CGNet 610. The trained RFNet 614 may output a refined point cloud 616 based on the coarse complete point cloud 612.

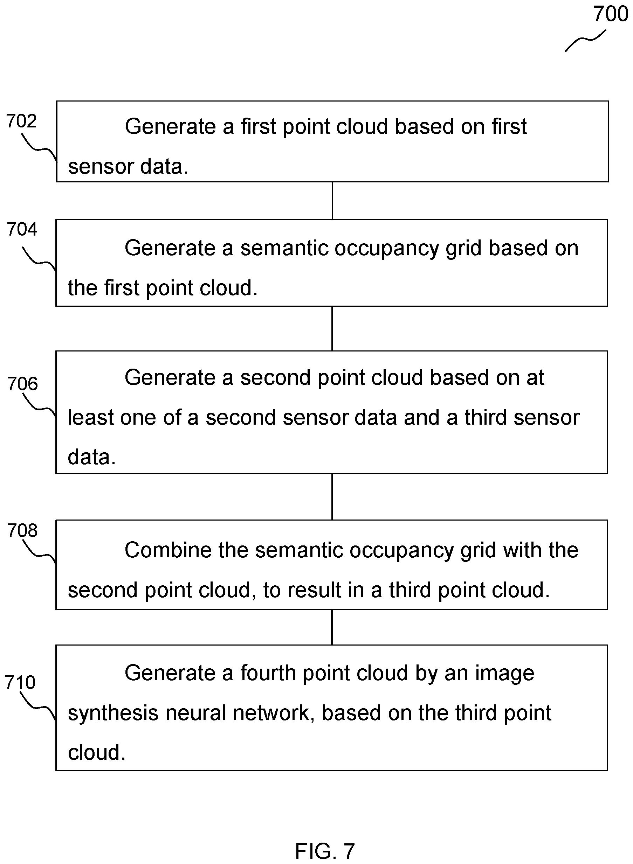

FIG. 7 shows a flow diagram of a method 700 for generating a high-resolution point cloud according to various embodiments. The method 700 may include, or may be part of, the method 100. The method 700 may include processes 702, 704, 706, 708 and 710. The process 702 may include generating a first point cloud 110 based on first sensor data 102. The process 704 may include generating a semantic occupancy grid 112 based on the first point cloud 110. The process 706 may include generating a second point cloud 114 based on at least one of a second sensor data 104 and a third sensor data 106. The process 708 may include combining the semantic occupancy grid 112 with the second point cloud 114, to result in a third point cloud 116. The process 710 may include generating a fourth point cloud 120 by an image synthesis neural network 118, based on the third point cloud 116, such that resolution of the fourth point cloud 120 is higher than resolution of any one of the first point cloud 110, the second point cloud 114 and the third point cloud 116. As a result of these processes, the fourth point cloud 120 may contain sufficient information for various driver assistance or autonomous driving applications such as 3D reconstruction, obstacle avoidance, navigation, and localization.

According to an embodiment which may be combined with any above-described embodiment or with any below described further embodiment, each of the first sensor data 102, the second sensor 104 and the third sensor data 106 is output by a respective type of sensor device. This may enhance the density of the final output of the method 700, as the different types of sensor devices may capture different types of information.

According to an embodiment which may be combined with any above-described embodiment or with any below described further embodiment, the first sensor data 102 is output by a radar sensor. The radar sensor operates by transmitting electromagnetic waves at radio frequencies that are generally unaffected by poor weather conditions, so the method 700 may be carried out under all weather conditions. Also, radar sensors may be capable of detecting objects even when they are partially occluded, thereby capturing an accurate map of the surroundings.

According to an embodiment which may be combined with any above-described embodiment or with any below described further embodiment, the first sensor data 102 is 3D radar data. 3D data includes elevation data of objects, and hence, is useful for denoising and densifying a complex 3D scene, for example, a 3D scene that includes overhanging structures or tunnels.

According to an embodiment which may be combined with any above-described embodiment or with any below described further embodiment, the second sensor data 104 is output by a LiDAR sensor. LiDAR sensor may provide accurate spatial data of objects in the environment.

According to an embodiment which may be combined with any above-described embodiment or with any below described further embodiment, the third sensor data 106 is output by a camera. Camera data has the advantage of capturing visual details including color and shape.

According to an embodiment which may be combined with any above-described embodiment or with any below described further embodiment, generating the semantic occupancy grid comprises generating an intermediate occupancy grid 202 based on the first point cloud 110, and generating the semantic occupancy grid 112 using a first classification neural network, based on the intermediate occupancy grid 202.

According to an embodiment which may be combined with any above-described embodiment or with any below described further embodiment, generating the second point cloud 114 comprises generating a semantic mask using a second classification neural network, based on the third sensor data 106, and projecting the semantic mask in the first point cloud 110, to thereby result in the second point cloud 114.

According to an embodiment which may be combined with any above-described embodiment or with any below described further embodiment, the second point cloud 114 is a colored point cloud. Colors are often an important visual feature, that may aid the detection and recognition of objects.

According to an embodiment which may be combined with any above-described embodiment or with any below described further embodiment, combining the semantic occupancy grid 112 with the second point cloud 114 comprises painting each data point in the second point cloud 114 with information from its corresponding data point in the semantic occupancy grid 112. By doing so, the amount of information of each point second point cloud 114 may be increased, thereby achieving a densification effect.

FIG. 8 shows a flow diagram of a method 800 for training an image synthesis neural network 118 according to various embodiments. The image synthesis neural network 118 may include a first network, for example, the CGNet 610 and a second network, for example, the RFNet 614. The method 800 may include, or may be part of, the method 600. The method 800 may include processes 802, 804, 806, 808, 810 and 812. The process 802 may include creating a mask using feature values of an input training point cloud. The input training point cloud may be part of the training dataset 602 or the augmented training dataset 606. The process 804 may include applying the mask to the input training point cloud, resulting in a modified training point cloud, also referred herein as the first training input 630. The process 806 may include inputting the modified training point cloud to the first network to generate a coarse training point cloud, also referred herein as coarse complete point cloud 612. The process 808 may include inputting the coarse training point cloud to the second network, to generate an output training point cloud, such as the refined point cloud 616. The process 810 may include comparing the output training point cloud and the input training point cloud. The process 812 may include adjusting weights of the second network based on comparison of the output training point cloud and the input training point cloud. The resulting trained image synthesis neural network 118 may be used to generate dense point clouds in real-time, as the vehicle sensors collect data about the environment around the vehicle. The vehicle may use these dense point clouds to perceive its surroundings, and to perform assisted or autonomous driving functions such as obstacle avoidance, localization and navigation.

According to various embodiments, a data structure may be provided. The data structure may be generated by carrying out the steps of the method 800. The data structure may include a trained image synthesis neural network that may generate high-resolution point clouds on the fly, as sensors collect data on a vehicle's environment.

While embodiments of the invention have been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced. It will be appreciated that common numerals, used in the relevant drawings, refer to components that serve a similar or the same purpose.

It will be appreciated to a person skilled in the art that the terminology used herein is for the purpose of describing various embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims.

## Claims

1. A computer-implemented method (100, 700) for generating a high-resolution point cloud, the method (100, 700) comprising:
generating a first point cloud (110) based on first sensor data (102);
generating a semantic occupancy grid (112) based on the first point cloud (110);
generating a second point cloud (114) based on at least one of a second sensor data (104) and a third sensor data (106);
combining the semantic occupancy grid (112) with the second point cloud (114), to result in a third point cloud (116); and
generating a fourth point cloud (120) by an image synthesis neural network (118), based on the third point cloud (116), such that resolution of the fourth point cloud (120) is higher than resolution of any one of the first point cloud (110), the second point cloud (114) and the third point cloud (116).

2. The method (100, 700) of any preceding claim, wherein each of the first sensor data (102), the second sensor data (104) and the third sensor data (106) is output by a respective type of sensor device.

3. The method (100, 700) of any preceding claim, wherein the first sensor data (102) is output by a radar sensor.

4. The method (100, 700) of claim 3, wherein the first sensor data (102) is 3D radar data.

5. The method (100, 700) of any preceding claim, wherein the second sensor data (104) is output by a LiDAR sensor.

6. The method (100, 700) of any preceding claim, wherein the third sensor data (106) is output by a camera.

7. The method (100, 700) of any preceding claim, wherein generating the semantic occupancy grid (112) comprises
generating an intermediate occupancy grid (202) based on the first point cloud (110), and
generating the semantic occupancy grid (112) using a first classification neural network, based on the intermediate occupancy grid (202).

8. The method (100, 700) of any preceding claim, wherein generating the second point cloud (114) comprises
generating a semantic mask using a second classification neural network, based on the third sensor data (106), and
projecting the semantic mask in the first point cloud (110), to thereby result in the second point cloud (114).

9. The method (100, 700) of any preceding claim, wherein the second point cloud (114) is a colored point cloud.

10. The method (100, 700) of any preceding claim, wherein combining the semantic occupancy grid (112) with the second point cloud (114) comprises painting each data point in the second point cloud (114) with information from its corresponding data point in the semantic occupancy grid (112).

11. A computer program product comprising instructions, embodied in one or more non-transitory computer-readable storage mediums, executable by at least one processor to perform the method (100, 700) of any preceding claims.

12. A point cloud generation system (308) comprising:
a memory (404); and
a processor (402) communicatively coupled to the memory (404) and configured to perform the method (100, 700) of any one of claims 1 to 11.

13. A vehicle (300) comprising:
a first sensor configured to generate the first sensor data (102);
a second sensor configured to generate the second sensor data (104) or the third sensor data (106); and
the point cloud generation system (308) of claim 14.

14. A method (600, 800) for training an image synthesis neural network comprising a first network and a second network, the method (600, 800) comprising:
creating a mask using feature values of an input training point cloud;
applying the mask to the input training point cloud, resulting in a modified training point cloud;
inputting the modified training point cloud to the first network to generate a coarse training point cloud;
inputting the coarse training point cloud to the second network, to generate an output training point cloud;
comparing the output training point cloud and the input training point cloud; and
adjusting weights of the second network based on comparison of the output training point cloud and the input training point cloud.

15. Data structure generated by carrying out the steps of the method (600, 800) according to claim 14.
